(19) Europäisches Patentamt
European Patent Office
Office européen des brevets

(11) Publication number: **0 030 733**
**A1**

(12) **EUROPEAN PATENT APPLICATION**

(21) Application number: **80107918.7**

(51) Int. Cl.³: **C 02 F 1/64**

(22) Date of filing: **15.12.80**

(30) Priority: **14.12.79 US 103322**
**02.05.80 US 145657**
**28.11.80 US 210923**

(43) Date of publication of application:
**24.06.81 Bulletin 81/25**

(84) Designated Contracting States:
**AT BE CH DE FR GB IT LI LU NL SE**

(71) Applicant: **Paterson, Laurene O.**
**1219 E. Church Street**
**Adrian, MI 49221(US)**

(72) Inventor: **Paterson, Laurene O.**
**1219 E. Church Street**
**Adrian, MI 49221(US)**

(74) Representative: **Gudel, Diether Patentanwälte Dr. V. Schmied-Kowarzik Dipl.-Ing. G. Dannenberg Dr. P. Weinhold, Dr. D. Gudel Dipl.-Ing. S. Schubert**
**Grosse Eschenheimer Strasse 39**
**D-6000 Frankfurt am Main 1(DE)**

(54) **Process and apparatus for removing dissolved iron from water.**

(57) Process and apparatus are provided for removing from water soluble and/or dispersed iron, which comprises the steps of:

(1) aerating (2,51) the water to introduce oxygen into solution therein under high frictional energy in a sufficient amount to form colloidally dispersed iron hydrates having a surface charge from substantially all of the dissolved and/or dispersed iron present;

(2) maintaining (7,52) the oxygenated water under a pressure within the range from about 10 to about 500 psig;

(3) then passing the oxygenated water under a pressure within the said range through a mass of particulate material (18,68) having a surface charge and a particle size above about 0.25 mm capable of attracting, removing and collecting the dispersed iron hydrates; and

(4) recovering (14,64) water containing less iron than the starting water, and preferably less than 0.3 mg per liter iron.

The iron hydrates collected on the mass of particulate material can easily be removed by backwashing (13,63).

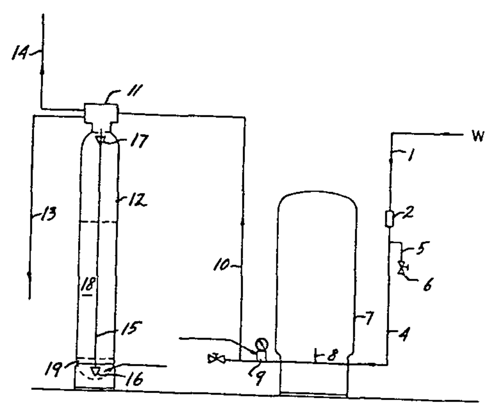


FIG. 1

EP 0 030 733 A1

# PROCESS AND APPARATUS FOR REMOVING DISSOLVED IRON FROM WATER

This application is a continuation-in-part of Serial No. 103, 322, filed December 14, 1979, and of Serial No. 145, 657, filed May 2, 1980.

Iron is present in dissolved form in a large proportion of fresh waters and is one of the most troublesome components of domestic and industrial water supplies because it is extremely difficult to remove, particularly from well water. Iron commonly occurs in well water as the soluble ferrous bicarbonate and ferrous sulphate. Well water is normally not exposed to oxygen until it has been drawn from the well, and so it is clear as drawn, but upon exposure to air slowly forms a deposit of the insoluble hydrated ferric compounds. The compounds are dark-colored, and consequently if they are deposited on bathroom or kitchen fixtures, clothes and other surfaces, dark ugly stains result which are difficult to remove.

It has been known for some time that the soluble ferrous iron present in water can be oxidized to insoluble hydrated ferric compounds upon contact with catalytic manganese oxides. The manganese higher oxides may be provided in a filter as an impregnant on a particulate carrier or as a ground manganese-containing ore. However, the oxidation of the ferrous iron to ferric iron by the manganese oxide results in reduction of the manganese oxide, which then has to be regenerated by treatment with a permanganate salt; this greatly increases the cost of the process and renders it impractical for ordinary household use. It is claimed that aeration of the water prior to the manganese oxide exposure eliminates or reduces the frequency of the regeneration step.

Regeneration with permanganate is cumbersome, expensive and time-consuming. The permanganates are purple in color and since they are a strong oxidant, stain hands and clothes. Correct dosage is difficult, which means that if there is excess permanganate present that can pass downstream of the filter, it can create as many problems as the iron that the filter is supposed to remove.

The most common way for removing iron from domestic water supplies, such as for household use, is by passing the water through a bed of cation exchange resin. The resin has to be regenerated by treatment with aqueous sodium chloride periodically to restore its iron-removing capacity.

Cation exchange resins used for water softening are not very efficient in the removal of iron. Iron collected in the bed is difficult to desorb during the brine regeneration step, since it is not readily removed by sodium chloride and requires the inclusion in the brine of an agent such as sodium hydrosulfite or a citrate. Moreover iron in the water deposits on and plugs the conditioner controls, leading to frequent shutdowns and service calls. If "red water" is passed through the bed, fouling of the resin bed occurs, considerably shortening the onstream cycle.

Soluble ferrous iron can also be oxidized to form filterable hydrated ferric compounds by treatment with oxidizing agents such as chlorine, hypochlorites and chlorine dioxide.

When the iron occurs in "red water" partial or even complete oxidation of the iron has already taken place. The insoluble ferric compounds responsible for the red color can be removed by a filter, but the still soluble ferrous compounds remain, to be precipitated later on, someplace else.

In large water supply systems, such as in municipal water plants or industrial plants, iron can be removed in the soda-lime water-softening process and in the aeration of water concommitantly with volatilization of carbon dioxide or hydrogen sulfide, followed by filtration.

Iron-bearing water is also aerated in large water systems under pressure in closed tanks where the necessary air is supplied by a compressor. The air enters the water in the form of bubbles which are not conducive to the formation of a stable colloidal system. The resulting iron hydrates tend to coalesce and filter out as a floc on the surface of filter media, requiring frequent backwashing.

Domestic water systems include a pump, a pressure tank provided with a pressure switch to control the filling of the tank, and, if desired, water-treating equipment. One type of pressure tank is a vessel having vertically spaced inlet and outlet water connections, in which the water enters through a side nozzle and exits through a bottom fitting. An air blanket maintained over the water is pressurized during the pumping cycle to force water out of the tank when a water faucet or other valve or line closure is opened. However, since water absorbs air, and under pressure tends to absorb even more, the air blanket is slowly absorbed by the water until the system is no longer sufficiently pressurized to move the water through the system, so that the tank has to be repressurized by intermittent emptying of the tank or by a snifter valve or jet charger.

The water injected into the tank through the side nozzle by the pump interfaces with the air in the tank to create some turbulence and a slow oxidation of the soluble ferrous iron occurs. The oxidized iron tends to coalesce, and is removed primarily on the surface of the filter media. However, the tanks in most domestic water systems are too small to provide the dwell time needed to remove iron in this way, and therefore iron still in soluble form passes through the filter; to be deposited someplace else in the water system.

Recently, a type of pressure tank has become popular in which a diaphragm barrier separates pressurized air from the water. Some of these tanks prevent the air from coming into contact with the water altogether, since the diaphragm is sealed into the tank wall. Under these circumstances, the water in the pressure tank does not have contact with air, and in fact leaves the tank substantially free from air. Snifter valves or jet chargers are not used with such tanks, since they would provide air in excess of that which can be dissolved by the water, and thus would gas-out in the filter to block the activity of the particulate material to remove the iron.

Accordingly, removal of iron in water systems using this type of pressure tank requires the addition of a permanganate-treated zeolite or cation exhange resin to the system.

The process in accordance with the invention can be operated in conventional pressurized water supply systems, and avoids the separate step of removal of iron in a permanganate-treated zeolite bed or a bed of cation-exchange resin, as well as the accompanying chemical regenerants and the equipment necessary to supply them.

The process and apparatus of the invention are adapted for continuous operation, and are capable of removing iron in a single-pass flow-through system. At the same time oxygen or air is introduced into the water under conditions of high turbulence and frictional energy so that dissolution of the oxygen or air is rapid and the resultant iron hydrates become colloidally dispersed. Such micelles carry intensified surface charge and offer more surface area for effective micelle collection and removal in a filter containing particulate material. Thus, the invention is capable of delivering water containing less iron than the starting water, preferably less than 0.3 mg of iron per liter or less, even substantially iron-free water.

The invention also provides apparatus for injecting oxygen or air into water in a manner that meets the requirements of the process for forming colloidally dispersed iron hydrates.

The process in accordance with the invention for removing soluble and/or dispersed iron from water comprises the steps of:

(1) aerating the water to introduce oxygen or air into solution therein under high frictional energy in a sufficient amount to form colloidally dispersed iron hydrates having a surface charge from substantially all of the dissolved and/or dispersed iron present;

(2) maintaining the aerated water under a pressure within the range from about 10 to about 500 psig;

(3) then passing the aerated water under a pressure within the said range through a mass of particulate material having a surface charge and a particle size above about 0.25 mm capable of attracting, removing and collecting the dispersed iron hydrates; and

(4) recovering water containing less iron than the starting water, and preferably less than 0.3 mg per liter iron.

The iron hydrates collected on the mass of particulate material can easily be removed by backwashing.

The apparatus in accordance with the invention for removing from water soluble and/or dispersed iron comprises, in combination:

(1) means for aerating the water to introduce oxygen into solution therein under high frictional energy in a sufficient amount to form colloidally dispersed iron hydrates having a surface charge from substantially all of the dissolved and/or dispersed iron present;

(2) means for maintaining and holding the aerated water under a pressure within the range from about 10 to about 500 psig;

(3) a bed of particulate material having a surface charge and a particle size above about 0.25 mm capable of attracting, removing and collecting the dispersed iron hydrates;

(4) means for passing the aerated water under a pressure within the said range through the said bed; and

(5) means for delivering water containing less iron than the starting water and preferably less than 0.3 mg per liter iron.

The term "iron hydrate" as used herein includes any insoluble compound of ferric iron containing water, oxygen or hydroxide combined with the ferric iron, such as hydrous ferric oxides, ferric hydroxide, hydrous ferric carbonate, and the various hydrous ferric silicates.

The invention further provides a device for aerating water containing water-soluble and/or dispersed iron to introduce air into solution therein under high frictional energy in a sufficient amount to form colloidally dispersed iron hydrates having a surface charge, comprising, in combination:

(1) a housing having an inlet for water; an inlet for oxygen or air; and an outlet for aerated water;

(2) a chamber in the housing for mixing water and oxygen or air and producing aerated water;

(3) first, second and third fluid flow passages in the housing interconnecting the water inlet, the air inlet and the aerated water outlet, respectively, with the chamber;

(4) jet means in one of the first and second fluid flow passages for projecting a high velocity jet flow of water or oxygen or air into the chamber across the inlet into the chamber of the second or first fluid flow passage, respectively, in a manner to draw oxygen or air or water from that passage into the chamber and into the high velocity jet flow and obtain violently turbulent mixing thereof to form a high velocity turbulent flow of aerated water;

(5) means for controlling the volume amount of at least one of the flows of water and oxygen or air into the chamber to control the amount of oxygen or air dissolved in the aerated water and the turbulence of the mixing;

(6) diffuser means receiving the flow of aerated water from the chamber and delivering it to the aerated water outlet of the housing; and

(7) means for maintaining the fluids throughout their passage through the housing under a pressure within the range from about 10 to about 500 psig.

The system also can include means for backwashing to remove iron hydrates collected on the bed of particulate material.

Preferred embodiments of the invention are shown in the drawings, in which:

Figure 1 is a flow sheet showing the apparatus components of a domestic or household water system including the apparatus of the invention;

Figure 2 is a longitudinal section of the injector mixer of Figure 1;

Figure 3 is a flow sheet showing the apparatus components of a municipal or community water system including the apparatus of the invention;

Figure 4 is a longitudinal section of the injector mixer of Figure 3; and

Figure 5 is a graph showing zeta potential, as determined on the Riddick Zetameter, against pH for hydrous ferric oxide floc, hydrous ferric silicate floc, and hydrous ferric oxide floc prepared in the presence of calcium ion.

Water can be aerated in accordance with the invention by using oxygen or air or any other mixture of oxygen or inert gas. Most pressurized water systems also include a water-holding tank equipped with a pressure switch to prevent pump cycling every time water is withdrawn from the system. Either an air-blanketed tank or a diaphragm-containing tank can be used and provides some holding time for the oxidation of the ferrous iron to reach completion. However, even where water is pumped directly to the bed of particulate material, iron residuals are often reduced to acceptable levels. Since the oxidation of the soluble ferrous compounds in the water proceeds rapidly in the aeration step, a water-holding tank thus may not be essential in the system, although it is preferred that a holding tank be included.

The bed of particulate material contains a particulate medium of a type to remove the iron hydrates. The bed of particulate material must be held under pressure, and can be placed in a pressure vessel provided with control for periodic backwash. The bed of particulate material must provide sufficient dwell time to destabilize and collect the iron hydrates, and prevent their passage downstream.

The necessary aeration of the water can be accomplished by using any available device suitable for introducing oxygen or air into water with high frictional energy and turbulence. Preferred devices that can be used are made up of three basic components: a nozzle, a diffuser and a housing holding these parts in their proper relative position, and providing a suction and mixing chamber for drawing in the oxygen or air and/or water and mixing the oxygen or air and water. One such device has two pipe connections, a water inlet and a water outlet, as well as a suction tube. The suction tube has a check valve to prevent water backflow when the pump is shut off, and a valve that finely controls the amount of oxygen or air drawn into the mixing chamber. The device may also contain a bypass valve, to divert a portion of the water from the nozzle so as to more precisely control the amount of oxygen or air drawn in through the suction tube when the water being pumped through the nozzle is in excess of that required for adequate air intake. Such a bypass is a desirable feature since the amount of oxygen or air intake through the suction tube is proportional to the velocity and therefore the amount of water passing through the nozzle, so that valving in the bypass adds a complementary means of oxygen or air dosage control.

The oxygen or air is drawn through the suction tube and swept into the water stream as it leaves the nozzle. This oxygen or airwater mixture is compressed again as it passes through the restriction in the diffuser. The violent turbulence and the decompression/compression taking place promote dispersion and complete dissolution of the oxygen or air in the water, and form the colloidal system providing the charged iron hydrate micelles.

Such devices permit control of the addition of small amounts of oxygen or air within narrow limits, and, at the same time, they act as jet compressors to quickly solubilize the oxygen or air and form the colloidal dispersion of iron hydrates in the water.

Such devices are commercially available, and are referred to as injector-mixers.

Another type of available device that is particularly adapted for use in larger systems is a succession of two to six converging nozzles followed by expansion chambers. In one form, controlled amounts of oxygen or air or water are introduced into the first expansion chamber at the first nozzle by a suction tube. In another form, compressed air is introduced as the motive force through the first nozzle to suck water into the mixing chamber. The high frictional energy and successive compression/decompression at each nozzle in series after the first leads to very rapid dissolution of the air in the water, which results in quantitative oxidation of the iron and a complex colloidal system of iron hydrates.

Municipal systems where piping is large may find it advantageous to use the second form, with air as the motive force, to facilitate the mixing of air and water. A compressor injects air through the nozzle of an injector-mixer inserted in the piping which injector acts to suck water into a mixing zone where violent turbulence prevails. A number of such injector-mixers may be used if the piping is sufficiently large. Such a system is shown in Figure 3.

Another means of injecting controlled amounts of oxygen or air into the water stream is by insertion of a snifter valve containing a spring-loaded check valve on the suction side of a non-submersible pump such as a piston or jet type. The snifter valve will open to permit air-intake when the pump is running but close on pump shut-off. The amount of air intake through the snifter valve must be carefully controlled by screw or other means to provide the small amount of air required for the oxidation of the iron but not enough to gas-out in the filter or cause the pump to lose prime. When the air is added by this means there is no need to draw air through a suction tube into the mixing chamber of the injector mixer. However, one or several nozzles should be provided within the injector-mixer for projecting a high velocity of the water-air mixture into the chamber, followed preferably by a diffuser to provide further turbulence.

Dissolution of the oxygen or air is enhanced by aerating the water in accordance with the invention under a pressure within the range from about 10 to about 500 psig and preferably within the range from about 10 to about 100 psig.

It is consequently important to maintain the pressure throughout the system within the range from about 10 to about 500 psig. Such pressures assist in avoiding gassing-out of the oxygen or air in the mass of particulate material that would block flow and more seriously, produce a gas barrier on the surface of the particles and prevent the proper functioning of the particulate material to remove iron hydrates.

While the aeration clearly results in the oxidation of the iron to the ferric state and most such ferric compounds show a rusty hue in water, the aerated water downstream of the injector-mixer may nonetheless be clear to the naked eye. The iron contained therein probably exists in the form of an invisible sol. Retention of the iron in colloidal form and avoidance of its coagulation is important so that a large surface area of highly-charged micelles may be presented to the particulate media during the filtration step. Furthermore, an in-depth filtration results, leading to less frequent backwash.

The colloidal system containing the iron which results from the aeration of the water passing through the injector-mixer is complex, and, in fact, will vary from water to water. It is known that pH plays an important role in determerming the type of charge on the micelles. As shown in Figure 5 hydrated ferric oxide in distilled water carries a positive charge below pH 6.5, above which point it carries an increasingly negative charge as the pH rises. Potable waters usually have a pH within the range 5.5 to 9.5. The process of the invention successfully removes iron within this range, most proficiently within the range of about 6.5 to 7.5.

Most well waters contain silica and in this instance a colloidal hydrous ferric silicate is probably formed. By referring to Figure 5 it is seen that a floc consisting of hydrous ferric silicate shows the expected negative charge, even at pH's as low as 5.5. Moreover hydrous ferric oxides and hydroxides readily adsorb bivalent cations of the type of $Ca^{++}$ and $Fe^{+++}$ to increase the positive potential on the already positively charged micelles or even reverse charge at the higher pH. (See Figure 5).

Phase boundary interaction between the variously charged micelles and the particulate material through which the aerated water flows leads to a rapid and substantially complete precipitation and removal of the colloidal components. To explain the removal of a negatively-charged iron-bearing micelle in a bed of particulate material showing a negative charge in the Reddick Zeta-Meter, one can postulate that the particulate material is cationic, will exchange with polyvalent cationic such as iron and calcium to provide localized strongly positive sites in the media, permitting it to attract micelles of either charge.

Particulate materials suitable for use in my filters are numerous. A variety of factors effect their efficiency to attract and filter out the iron-containing micelles, among which is surface charge, ion exchange ability, rough or porous surface and particle size. So far as is known any mineral capable of carrying a charge, capable of being subdivided or compressed into a particulate form and provide a reasonably rough or porous surface can serve as a filter bed. The effect of the particulate material appears to be physical, not chemical except as the material may undergo ion exchange.

No other chemical reaction is involved, so far as is presently know in the attraction itself, and no catalytic effect has been detected, since the aeration of the water under pressure and high frictional energy is evidently sufficient quantitatively to convert the soluble iron to colloidal iron hydrates.

It has been noted that particles having a rough surface, such as a nodulous or porous surface, and therefore an appreciably higher surface area per unit area, tend to attract, collect and remove the iron hydrate micelles more effectively. The term "rough" as used herein refers to a surface that, far from smooth, has perceptible indentations, including hollows, crypts and pores, and protruberances, including peaks, nodules, ridges, and crags. Porous rough-surfaced materials such as pumice and diatomite are especially good examples of rough materials. The material can be rough as naturally-occurring, after being subdivided to a convenient particle size, or as synthetically compacted or compressed into shapes or aggregates from smaller particles, such as extruded rods.

The effectiveness of rough materials is probably due to the greater surface area of the material for contact with the micelles. Evidence in support of this theory is the fact that materials which tend to erode or excoriate under the action of the water flowing through the mass, thereby increasing the surface area carrying the negative charge as the flow continues, are the most effective materials of those that have been tried.

Exemplary particulate materials are the siliceous materials, such as silica or sand and the diatomaceous earths; the aluminum silicates, including the milled and classified materials, and extruded or compressed materials, for example, the bentonites, fuller's earth, kaolin, feldspar, the zeolites, perlite, pumice, and other forms of lava. Perlite and pumice are especially effective and are preferred.

Less effective but also satisfactory are the magnesium silicates, such as talc. Natural aluminas such as bauxite and the purified bauxites, hydrated aluminas, and aluminas $Al_2O_3$, can also be used, as well as the dolomites, limestone, and magnesia, and the various mixed forms such as the partially calcined dolomite, calcium carbonate, magnesium carbonate, and magnesium aluminum oxide ($MgO \cdot Al_2O_3$) and the various forms of carbon, such as coke, bituminous charcoal, and activated carbon extrusions or compressed shapes.

Mixtures of two or more of these materials can be used.

The particle size of the material can be within the range from about 0. 25 mm to about 25 mm and preferably from about 0. 5 to about 2 mm. Finer materials tend to cake and block flow, while the larger materials do not sufficiently impede flow, and do not provide a sufficiently high surface area so that beds of impractical length or volume have to be employed.

Where it is necessary to raise the pH of the water dolomite, limestone or their partically calcined counterparts or magnesia pellets may be used as the particulate material in the bed. They serve the dual purpose of removing acidity and precipitating and collecting the iron-containing micelles. It is to be further noted that these materials are usually positively charged. As shown in Figure 5 the raising of pH increases electronegativety of the iron hydrate micelles, making for a strong interaction and very efficient removal of the iron.

Theoretically, 1 mg/liter of dissolved oxygen will oxidize 7 mg/liter of ferrous iron to the ferric state. This minimum amount would be required to convert the ferrous iron to the hydrated ferric oxide. However, more than this can be used to facilitate the conversion. Example 14 shows that three times the theoretical gives virtually quantitative iron removal. In a case of high iron content, such as 25 mg/liter soluble iron, the oxygen content need not exceed 10 mg/liter.

In current processes for the removal of iron by precipitation as hydrated ferric compounds the particles are formed and precipitated before contact with a filter bed. This means that the previously formed material is collected in the upper portion of the filter bed, which results in early blocking of the filter, with a resultant frequent backwashing. In contrast, the present invention removes the iron hydrates within the bed, and results in depth collection, with the iron hydrates surprisingly uniformly distributed throughout the bed. This means that in the process and apparatus of the invention, a deep bed is well utilized, which reduces the number of backwashings in a given time interval, or alternatively, increases the length of the intervals between backwashings.

Iron-containing waters tend to deposit iron in ionic form on materials which they contact. With cation exchange resins the iron has to be removed by regeneration of the bed, and such iron is difficult to remove from the bed. In the process and apparatus of the invention, the iron-containing micelles are deposited as a nonionic floc that is adsorbed on the surface of the particles of the bed material and can be readily removed by simple backwashing or by upsetting and floating the bed in wash water, while any iron that may exchange with the bed should remain there, because it is functional to provide localized charge areas on the bed.

The domestic water system shown in Figure 1 receives water pumped from a well W via line 1, which is led into the injector mixer 2, shown in detail in Figure 2. The aerated water passes into line 4, which directly downstream of the mixer is tapped via line 5 and valve 6 for sampling the aerated water. The sampling permits monitoring of the amount of oxygen in the aerated water. The water enters the pressure holding tank 7 via the line 8 at the bottom until the tank is under a predetermined maximum gauge pressure, say 40 psig, and then the pressure switch 9 kicks off, to shut off the pump pumping water from the well (not shown). Water is drawn from the tank whenever a faucet is opened, until the tank is drawn down to a predetermined minimum pressure, of say 20 psig, whereupon the pressure switch 9 kicks on, starting the pump to repressurize the tank to 40 psig.

Downstream of the switch 9, the water, containing iron hydrate micelles, passes via line 10 to the control valve 11, which directs the influent flow into the tank 12, and alternatively, to the backwash line 13 or to the service line 14. The tank 12 is provided with a dip tube 15, extending from top to bottom of the tank, with diffusers 17, 16 at the top and bottom ends. The top of the dip tube 15 is directly connected to the valve 11, which directs flow in either direction in the line between either the service line 14 or the backwash line 13.

The tank 12 contains a bed 18 of particulate material such as pumice supported on a gravel layer 19,deep enough to cover the diffuser 16.

The flow entering the tank 12 from the line 10 is directed by the valve 11 to the top of the bed 18, and passes down through the bed to and through the gravel layer 19 and then enters the diffuser 16 via dip tube 15 whence it reenters the valve 11, and is directed into line 14 for service.

When the bed 18 needs to have the collected iron hydrate particles, i.e., the sludge, removed, the backwashing mode is adopted. The valve 11 is turned so that the influent flow is directed into the dip tube 15 out through the diffuser 16 and upwardly, in the reverse direction, through the bed. This unloads the collected sludge, which is drawn through the diffuser 17, which retains the particulate material in the tank, and thence dumped via the backwash line 13.

The injector mixer 2 is shown in detail in Figure 2, and has a well water inlet 20 and an aerated water outlet 21 interconnected by a through flow passage 22. This passage is divided into two sub-passages 23, 24 by the wall 25. The passage 23 is a bypass passage, whose flow capacity is controlled by the screw valve 26, which can be moved between positions extending all the way across the passage

to the wall 25, or fully withdrawn into its threaded socket 27. In the second passage 24 is a converging nozzle 28, and the nozzle terminates in the suction chamber 30. The chamber is coextensive with the end of the passage 24, and the chamber has a suction inlet 31, and an outlet 32 which leads into the diffuser 29. The diffuser opens into the passage 22 just before the outlet 21.

The suction inlet provides for air intake into the suction chamber 30. The air thus introduced mixes turbulently with water ejected from the nozzle into the chamber and the mixture passes out through the diffuser. Control of the amount of air taken in is provided by the screw valve 35 which is housed adjacent the atmospheric air inlet 36. The air flow passage 37 interconnecting the inlet 36 with the suction inlet 31 has an expanded portion or chamber housing a ball check valve 38, defining an annular passage for air flow past the ball 39. When fluid flow through the nozzle 28 ceases, so does aspiration of air, and fluid pressure in the system closes the check valve, the ball 39 seating against the sealing gasket 34.

In operation, flow through the passage 22 is divided into bypass flow via passage 23 and nozzle flow via passage 24. The water jet from the nozzle 28 aspirates an amount of air controlled by the valve 35 via passage 37 past the check valve 38 into the suction chamber 30. In the suction chamber the air and water are violently mixed, and the mixture escapes via the diffuser 29 to be turbulently blended into the bypass flow.

The municipal water system shown in Figure 3 receives water pumped by pump P from a reservoir or well (not shown) via line 50, past the injector mixer 51 (shown in detail in Figure 4) into the pressure holding tank 52. The aerated water downstream of the mixer 51 passes into line 54, which can be tapped by a line and valve (not shown, but as in Figure 1) for sampling the aerated water. Such sampling permits monitoring of the amount of oxygen in the aerated water. The water enters the pressure holding tank 52 via the line 54 at one end until the tank is under a predetermined maximum gauge pressure, say 75 psig; then the pressure switch 59 kicks off, to shut off the pump P. Water is drawn from the tank 52 whenever a withdrawal is made, until the tank is drawn down to a predetermined minimum pressure, of say 50 psig, whereupon the pressure switch 59 kicks on, the pump P starts, and the water flows down line 50, reenters the valve 60, and is directed into line 54 for service.

When the bed 68 needs to have the collected iron hydrate particles, i.e., the sludge, removed, the backwashing mode is adopted, as in Figure 1. The valve 60 is turned so that the influent flow is directed in the reverse direction through the bed. This unloads the collected sludge, which is drawn through a screen (not shown) to retain the particulate material in the tank, and thence dumped via the backwash line 63.

The injector mixer 51 is shown in detail in Figure 4, has an air inlet 70 fed by air under pressure from line 71 by air compressor 72 (see Figure 3). The line 71 is provided with a valve 73 which can be moved into selected positions according to the amount of air flow required for the aeration. The air inlet 70 communicates with an orifice 74, also sized according to the air flow required for the aeration. Beyond the orifice a diffuser 75 is carried on four supports 76 anchored to the orifice housing 77 of the mixer 51. The supports 76 define therebetween openings 78 leading into the mixing chamber 79, permitting water entering via openings 78 to mix with air ejected from the orifice 74. The violently turbulent mixture then enters the diffuser 75, and after leaving the diffuser is turbulently blended with the main water stream in passage 80.

In operation, water flow from line 50 is divided into main flow via passage 80 and flow drawn into mixing chamber 79 via openings 78. The air jet from the orifice 74 aspirates an amount of water controlled by the air velocity through the orifice which in turn is controlled by the valve 73 and air compressor 72, and the size of the orifice 74 into the mixing chamber 79. In the mixing chamber the air and water are violently mixed, and the mixture escapes via the diffuser 75 to be turbulently blended into the main water stream in passage 80.

The following Examples in the opinion of the inventor represent preferred embodiments of the invention:

0030733

EXAMPLES 1 to 12

In these Examples, the apparatus used for the test runs comprised a submerged pump, a Well-x-trol diaphragm pressure tank and a filter bed. The Well-x-trol tank was provided with a pressure switch with a setting of 20 psig to initiate pump start, and a 40 psig setting for pump stop. Between these pressure limits the pump had an average pumping rate of 19 gpm.

The pressure tank had a total capacity of 10 gallons per pumping cycle.

The particulate material used, as shown in Table I, was confined in a vertical tank 9 inches in diameter and 48 inches high. The tank was loaded to a depth of 26 inches with granular particulate material of the type indicated in the Table, such as, for instance, in Example 1, pumice granules, and the particulate material held in place by a coarse gravel underlay 6 inches deep. The bed of particulate material acted to collect and remove the iron hydrate micelles present in the aerated water.

The tank was provided with a manual control valve permitting the water to pass through the bed to service or by backwash to drain.

The water as pumped from the well was analyzed, and found to contain 4. 5 mg/liter of soluble iron. To prepare the system for service the particulate bed was backwashed to remove excessive fines, and orient the bed by particle size. With the filter control valve in the service position, water was then passed continuously through the bed, at the rate of 4 gpm/sq. ft., and samples were taken for iron analysis.

First, the test runs were carried out omitting the injector mixer from the system, and leading the well water directly to the pressure tank. Little or no reduction in the iron content of the water occurred in this series, as can be seen in Table I.

Next, the test runs were carried out with the injector mixer. For aeration of the water, the injector mixer was interposed between the pump and the pressure tank. The air intake through the suction tube was regulated to provide a dissolved oxygen content in the water of 1.2 mg/l. The treated water was then passed through the bed of particulate material, and again water samples were taken and analyzed for iron.

The effectiveness of the injector mixer in removing the iron is apparent from Table I. The most effective particulate material listed was pumice, which reduced the iron content to less than 0.05 mg/l. Extruded bentonite and kaolin were also very effective. Least effective were anthracite and silica sand No. 1 which were not rough, but had a smooth glass-like surface. Silica sand No. 2 showed a rough nodulous surface under microscopic examination, confirming the effect of the rough surface on the removal efficiency of the material.

TABLE I

| Example No. | Particulate Material | Particle Size | Surface | Excoriates | Effluent water: Aerated 1.2 mg/l $O_2$ Fe-mg/l | Effluent water: Non-aerated Fe-mg/l |
|---|---|---|---|---|---|---|
| 1 | Pumice[1] | 0.6 mm | rough porous | yes | 0.05 | 4.2 |
| 2 | Coke[1] | 0.82 mm | rough porous | Slightly | 1.5 | 4.3 |
| 3 | Carbon[2] | 1/16 inch | rough | yes | 0.8 | 4.3 |
| 4 | Anthracite[1] | 0.8 mm | smooth | no | 3.8 | 4.4 |
| 5 | Sand No. 1[1] | 0.7 mm | smooth | no | 3.2 | 4.3 |
| 6 | Sand No. 2[1] | 1.0 mm | rough | no | 1.75 | 4.4 |
| 7 | Talc[1] | 0.84 mm | rough | yes | 0.5 | 4.3 |
| 8 | Diatomaceous earth[2] | 1/16 inch | rough[4] | yes | 0.5 | 4.3 |
| 9 | Bentonite[2] | 1/16 inch | rough[4] | yes | 0.3 | 4.4 |
| 10 | Kaolin[2] | 1/16 inch | rough[4] | yes | 0.3 | 4.4 |
| 11 | Zeolite[2]-ion exchange aluminum silicate | 1/16 inch | rough[4] | Slight | 1.6 | 4.3 |
| 12 | Dolomite, partially calcined | 0.65 mm | rough | yes | 0.07 | 4.3 |

[1] media were screened to provide particle size as shown
[2] media were milled, wet extruded and dried
[3] water had a pH of 6.9 and contained 4.5 mg/liter of dissolved iron. It was passed through the filter at a rate of 4 gpm/ft².
[4] roughened by excoriation in use

## EXAMPLES 13 to 15

Using the same apparatus as Examples 1 to 12 with a pumice bed screened to provide pumice particles 0.6 mm in diameter, a series of runs were carried out at different flow rates, at different amounts of oxygen added through the injector mixer, and at different pH's. In Example 13, the flow rate was varied. In Example 14, the amount of oxygen was varied, and in Example 15, the pH of the water was varied. The well water contained 4.5 mg/l of dissolved iron, and would require a theoretical dosage of 0.675 mg/l of dissolved oxygen to completely oxidize the contained ferrous iron.

The results obtained are shown in Table II.

TABLE II

| Example No. | Particulate Material | Flow rate (gpm/ft$^2$) | Aerated $O_2$ (mg/l) | pH of well water | Fe-in effluent (mg/l) |
|---|---|---|---|---|---|
| 13 | Pumice-ground and screened 0.6 mm | 2.8 | 1.4 | 6.9 | 0.02 |
| | | 3.7 | 1.4 | 6.9 | 0.05 |
| | | 4.5 | 1.4 | 6.9 | 0.2 |
| | | 9.3 | 1.4 | 6.9 | 0.6 |
| | | 10.0 | 1.4 | 6.9 | 0.8 |
| 14 | Pumice as above | 4.5 | 0.7 | 6.9 | 0.2 |
| | | 4.5 | 1.0 | 6.9 | 0.2 |
| | | 4.5 | 1.2 | 6.9 | 0.1 |
| | | 4.5 | 1.6 | 6.9 | 0.04 |
| | | 4.5 | 2.0 | 6.9 | 0.02 |
| 15 | Pumice as above | 4.5 | 1.2 | 6.25 | 1.2 |
| | | 4.5 | 1.2 | 6.4 | 0.8 |
| | | 4.5 | 1.2 | 6.6 | 0.6 |
| | | 4.5 | 1.2 | 6.8 | 0.2 |
| | | 4.5 | 1.2 | 7.1 | 0.05 |

The results for Example 13 show that a slower flow rate through the bed improves iron removal efficiency. A longer retention time in the bed promotes collection and removal of the iron hydrates and also prevents a breakthrough of iron-containing floc through the bed.

The results for Example 14 show that more than the theoretical amount of oxygen, about 0.7 mg/l, is beneficial in improving iron removal efficiency. Best results are obtained at three times the theoretical amount.

The results for Example 15 show that pH should exceed 6.4 for optimum iron removal efficiency. Best results are obtained at a pH of 6.8 and above.

EXAMPLE 16

Using the apparatus of Examples 1 to 12, a run was carried out using pumice with water containing 25 mg/liter of soluble iron, the maximum amount usually found in a water supply. The results obtained are shown in Table III.

TABLE III

| | Grain Size (mm) | Surface | Excoriates | Aerated 5.2 mg/l $O_2$ Fe-mg/l |
|---|---|---|---|---|
| pumice | 0.6 | rough porous | yes | 0.17 |

EXAMPLE 17

In this Example the community water system shown in Figure 3 was used, with a pump, a 4300 gallon pressure tank and a 36" x 6' bed of particulate material provided with the necessary 6" piping and controls for backwashing. A pressure range of 50 to 75 psig was maintained in the system. The particulate material used in the bed consisted of expanded perlite having an average particle size of 0.8 mm. Water containing 3.2 mg/l of iron was pumped to the pressure tank at a rate of 80 gpm and was aerated in 6" piping by using two small injector mixers inserted as shown. The compressor was set to deliver air through the injectors to provide an $O_2$ content in the water of 1.2 mg/l. The system was well backwashed and allowed to come to equilibrium by water withdrawal over a two day period. At the end of this time the pH was found to be 7.0 and iron reduced to 0.12 mg/l. Water withdrawal rates continued at about 3000 gallons per day; backwashing to remove the collected iron-containing sludge was carried out once weekly.

EXAMPLE 18

Using the same apparatus as in Examples 1 to 12 a jet pump was substituted for the submersible pump. The jet pump was fitted with a snifter valve provided with a spring-loaded check valve at the suction connection of the pump. A screw protruding into the air stream controlled flow rate of air into the water. An injector mixer was inserted downstream of the pump, between the pump and the pressure tank. The suction inlet of the injector mixer for air intake was eliminated. The analysis of the effluent water showed an iron content of 0. 5 mg/l.

Claims:

1. A process for removing from water soluble and/or dispersed iron, which comprises the steps of:
(1) aerating the water to introduce oxygen into solution therein under high frictional energy in a sufficient amount to form colloidally dispersed iron hydrates having a surface charge from substantially all of the dissolved and/or dispersed iron present;
(2) maintaining the aerated water under a pressure within the range from about 10 to about 500 psig;
(3) passing the aerated water under a pressure within the said range through a mass of particulate material having a surface charge and a particle size above about 0.25 mm capable of attracting, removing and collecting the dispersed iron hydrates; and
(4) recovering water containing less iron than the starting water.

2. A process according to claim 1 in which the water that is recovered contains less than 0,3 mg per liter iron.

3. A process according to anyone of claims 1 to 2 which includes backwashing the mass of particulate material and thereby removing iron hydrates collected theron.

4. A process according to anyone of claims 1 to 3 in which oxygen or air is used in the aeration.

5. A process according to anyone of claims 1 to 4 the pH of the water that is being treated is maintained at at least about 5.5, preferably from about 6.5 to about 7.5, especially up to but not exceeding 9.5.

6. A process according to anyone of claims 1 to 5 air is introduced to supply oxygen in an amount of at least 1 mg/liter per 7 mg/liter of ferrous iron up to but not exceeding 10 mg/liter.

7. A process according to anyone of claims 1 to 6 in which the particle size of the particulate material is within the range from about 0.25 mm to about 25 mm, preferably from about 0.5 to about 2 mm.

8. A process according to anyone of claims 1 to 7 in which the particulate material is a material which tends to wear away under the action of the water flowing through the mass, thereby increasing the surface area as the flow continues.

9. A process according to anyone of claims 1 to 8 in which the particulate material is porous or rough-surfaced.

10. A process according to anyone of claims 1 to 9 in which the particulate material is compressed into shaped aggregates from smaller particles.

11. A process according to anyone of claims 1 to 10 in which the particulate material is silica, an aluminium silicate, a magnesium silicate, an alumina, a calcium carbonate or a carbon.

12. A process accroding to anyone of claims 1 to 10 in which the material is selected from the group consisting of silica, sand, bentonite, fuller's earth, kaolin, diatomaceous earth, feldspar, marble, calcined calcium carbonate, perlite, pumice, lava, magnesium silicate, talc, alumina, bauxite, dolomite, calcium carbonate, partially calcined dolomite, magnesia, coke, bituminous charcoal and activated carbon.

13. An apparatus for removing from water soluble and/or dispersed iron, comprising, in combination:

(1) means for aerating the water to introduce oxygen into solution therein under high frictional energy in a sufficient amount to form colloidally dispersed iron hydrates having a surface charge from substantially all of the dissolved and/or dispersed iron present;

(2) means for maintaining the aerated water under a pressure within the range from about 10 to about 500 psig;

(3) a bed of particulate material having a surface charge and a particle size above about 0.25 mm capable of attracting, removing and collecting the dispersed iron hydrates;

(4) means for passing the aerated water under a pressure within /the said range through the said bed; and

(5) means for delivering water containing less iron than the starting water.

14. An apparatus accoridng to claim 13 which also includes means for backwashing to remove iron hydrates collected on the beds of particulate material.

15. An appparatus according to anyone of claims 13 to 14 in which the means for aerating the water is a device suitable for introducing air into water with high frictional energy.

16. An apparatus according to claim 15 in which the device is an injector mixer having a mixing chamber into which the air is drawn and contacted with the water under conditions developing high frictional energy and at the same time under reduced pressure and a flow restriction through which the air/water mixture is then compressed as it passes through the restriction, and then decompresssed, the decompression/compression promoting dispersion and complete dissolution of the air in the water.

17. An apparatur according to claim 17 in which injector mixer comprises a nozzle; a diffuser having a flow restriction; a housing holding these parts in their proper relative position, and providing a suction and mixing chamber for drawing in the air and mixing it in the water; a water inlet and a water outlet; a suction tube; a check valve in the suction tube to prevent water backflow when the flow is shut off, and a valve that finely controls the amount of air drawn into the mixing chamber.

18. An apparatus according to claim 17 in which the injector mixer also contains a bypass valve to divert a portion of the water from the nozzle so as to more precisely control the amount of air drawn in through the suction tube and at the same time maintain enough water velocity for proper air dissolution.

19. An apparatus according to anyone of claims 13 to 18 in which the device is a succession of two to six converging nozzles followed by expansion chambers having means introducing air or water in controlled amounts into the first expasion chamber at the first nozzle, and mixing air and water under conditions developing high frictional energy and successive compression/decompression at each nozzle in series, with a rapid dissolutuion of the air in the water.

20. An apparatus according to anyone of claims 13 to 19 in which the means for aerating the water comprises a pump, an injector nozzle downstream of the pump, and an airintake valve comprising a spring-loaded check valve on the suction side of the pump, and means controlling the amount of airtaken in by the valve.

21. An apparatus according to anyone of claims 13 to 20 including a waterholding tank in line between the aerating means and the bed of particulate material, maintaining the pressure within the range from about 10 to about 500 psig.

22. An apparatus according to claim 21 in which the tank is an air-blanketed tank or a diaphragm-fitted tank.

23. An apparatus according to anyone of claims 13 to 22 in which the particulate material is a material which tends to wear away under the action of the water flowing through the mass, thereby increasing the surface area as the flow continues.

24. An apparatus according to anyone of claims 13 to 23 in which the particulate material is porous or rough-surfaced.

25. An apparatus according to anyone of claims 13 to 24 in which the particulate material is compressed into shaped aggregates from smaller particles.

26. An apparatus according to anyone of claims 13 to 25 in which the particulate material is a silica, an aluminum silicate, a magnesium silicate,an alumina, a calcium carbonate or carbon.

27. An apparatus according to anyone of claims 13 to 25 in which the particulate material is selected from the group consisting of silica, sand, bentonite, fuller's earth, kaolin, diatomaceous earth, feldspar, marble, partially calcined limestone, perlite, pumice, lava, magnesium silicate, talc, alumina, magnesium aluminum oxide, bauxite, dolomite, limestone, partially calcined dolomite, magnesia, coke, bituminous charcoal and activated carbon.

28. An apparatus for aerating water containing water soluble and/or dispersed iron to introduce air into solution therein under high frictional energy in a sufficient amount to form colloidallly dispersed iron hydrates having a surface charge, comprising, in combination:
(1) a housing having an inlet for water; an inlet for air; and an outlet for aerated water;
(2) a chamber in the housing for mixing water and air and producing aerated water;

(3) first, second and third fluid flow passages in the housing interconnecting the water inlet, the air inlet and the aerated water outlet, respectively, with the chamber;

(4) jet means in one of the first and second fluid flow passages for projecting a high velocity jet flow of water or air into the chamber across the inlet into the chamber of the second or first fluid flow passage, respectively, in a manner to draw air or water from that passage into the chamber and into the high velocity jet flow and obtain violently turbulent mixing thereof to form a high velocity turbulent flow of aerated water;

(5) means for controlling the volume amount of at least one of the flows of water and air into the chamber to control the amount of air dissolved in the aerated water and the turbulence of the mixing;

(6) diffuser means receiving the flow of aerated water from the chamber and delivering it to the aerated water outlet of the housing;
and

(7) means for maintaining the fluids throughout their passage through the housing under a pressure within the range from about 10 to about 500 psig.

29. An apparatus according to claim 28 in which the device is an injector mixer having a mixing chamber into which the air is drawn and contacted with the water under conditions developing high frictional energy and at the same time under reduced pressure and a flow restriction through which the air/water mixture is then compressed as it passes through the restriction, and then decompressed, the decompression/compression promoting dispersion and complete dissolution of the air in the water.

30. An apparatus according to claim 29 in which the injector mixer comprises a nozzle; a diffuser having a flow restriction; and disposed in the line of air flow in the second passage a check valve to prevent water backflow when the nozzle flow is shut off; and a valve that finely controls the amount of air drawn into the mixing chamber.

31. An apparatus according to claim 30 in which the housing also contains a bypass valve diverting and accepting a portion of the water from the nozzle so as to more precisely control the amount of air drawn in through the second passage and at the same time maintain enough water velocity for proper air dissolution.

32. An apparatus according to anyone of claims 28 to 31 comprising a succession of two to six converging nozzles followed by expansion chambers having means introducing air or water in controlled amounts into the first expansion chamber at the first nozzle, and mixing air and water under conditions developing high frictional energy and successive compression/decompression at each nozzle in series, with a rapid dissolution of the air in the water.

33. An apparatus according to anyone of claims 28 to 32 in which the jet means is arranged in the first fluid flow passage for projecting a jet flow of water.

34. An apparatus according to anyone of claims 28 to 32 in which the jet means is arranged in the second fluid flow passage for projecting a jet flow of air.

35. An apparatus according to claim 34 in which the jet means is an orifice.

36. An apparatus according to claim 35 in which the diffuser is axially mounted on legs carried on the housing, the legs defining the mixing chamber therewithin, and the orifice, jet therefrom and diffuser are arranged along the same central axis, while the water enters the mixing chamber between the legs.

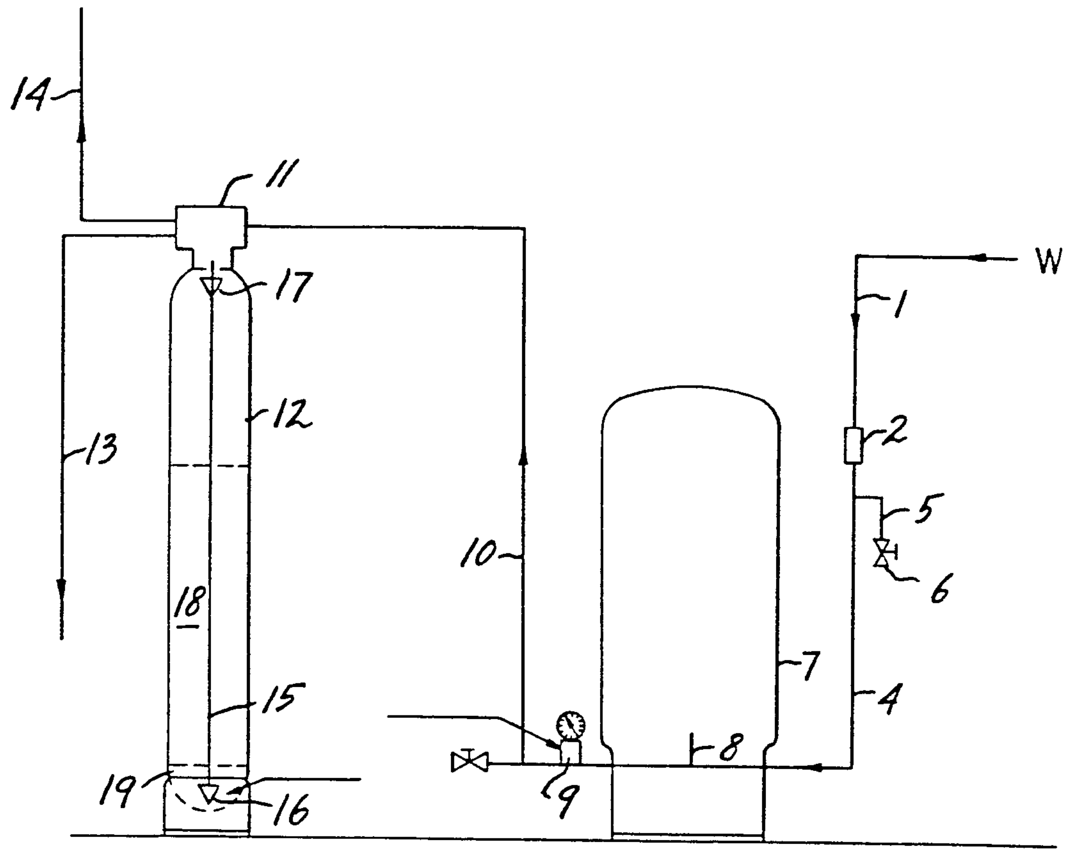


FIG. 1

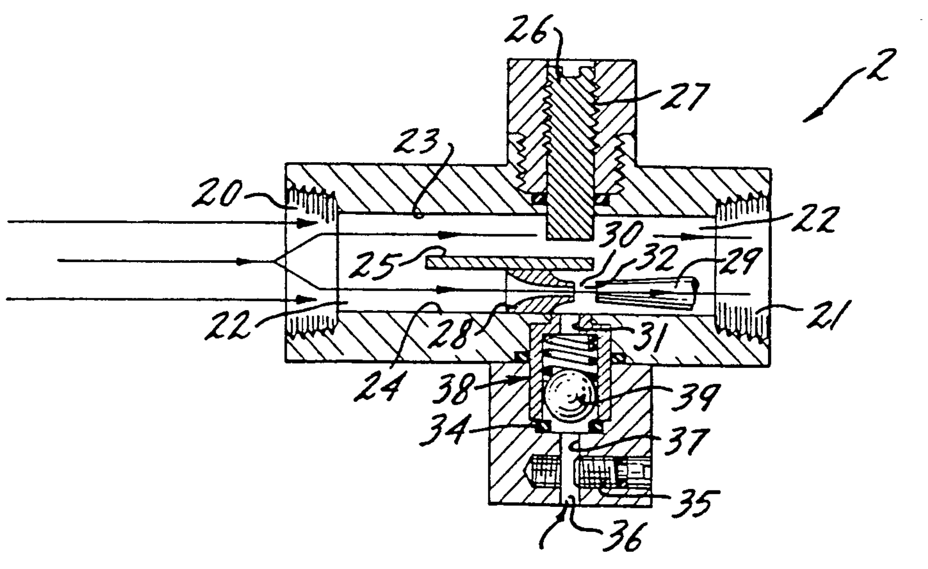


FIG. 2

L.O. Paterson
80 107 918.7

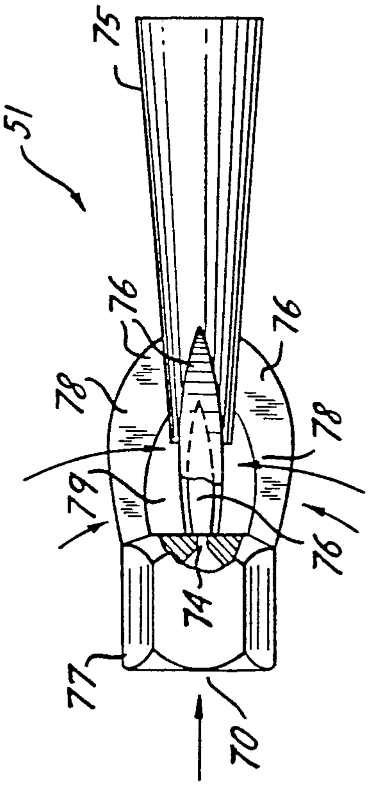
51
75
76
76
78
78
79
76
74
77
70

FIG. 4

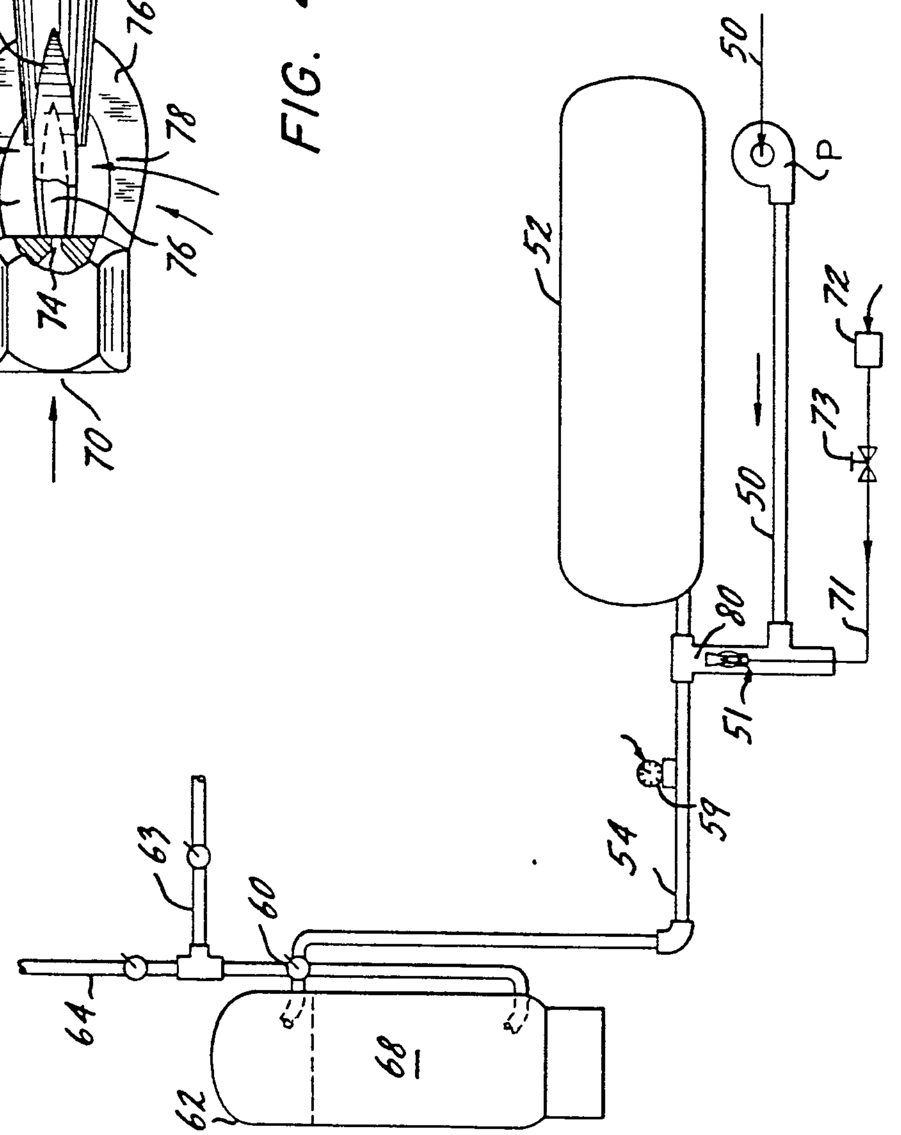
50
P
52
72
73
50
80
71
51
59
54
63
60
64
68
62

FIG. 3

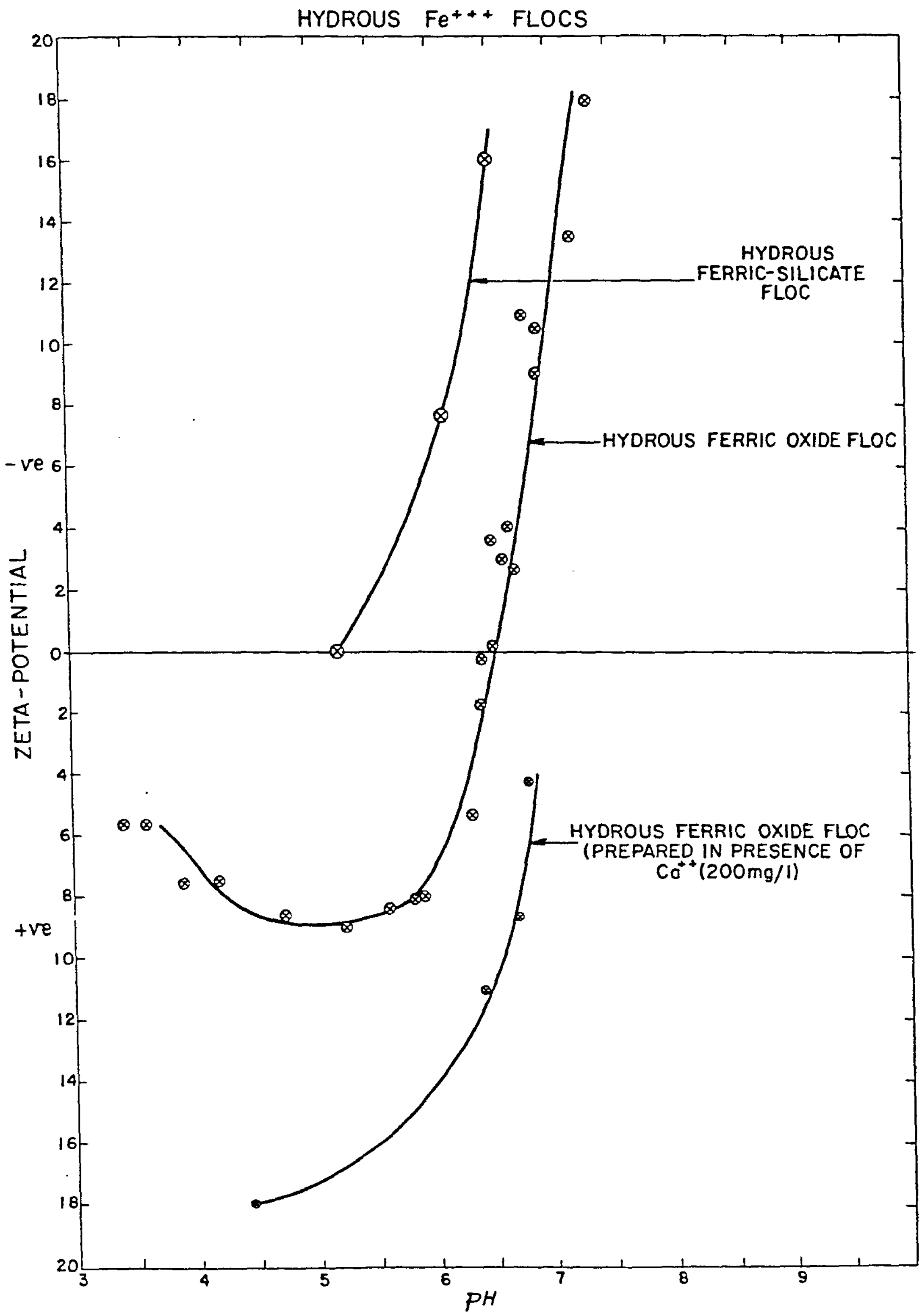


*FIG.5*

L.O. Paterson
80 107 918.7

European Patent Office

# EUROPEAN SEARCH REPORT

Application number

EP 80107918.7

| Category | DOCUMENTS CONSIDERED TO BE RELEVANT<br>Citation of document with indication, where appropriate, of relevant passages | Relevant to claim | CLASSIFICATION OF THE APPLICATION (Int. Cl.³) |
|---|---|---|---|
| | AT - B - 29 736 (BREDA)<br>+ Totality +<br>-- | 1-4,9, 13,16-18,20, 24,28, 29,33 | C 02 F 1/64 |
| | DE - A1 - 2 413 894 (ERNING)<br>+ Claim 1 +<br>-- | 1 | |
| | DE - A - 2 031 941 (KRATZENSTEIN)<br>+ Totality; especially page 3, lines 2-6, 25-31; page 4, lines 6-18; claims 1,4 +<br>-- | 1,13 | |
| | | | TECHNICAL FIELDS SEARCHED (Int. Cl.³) |
| | DE - C - 297 587 (HUBER)<br>+ Totality; especially claims +<br>-- | 1,11 | C 02 F |
| A | DE - C - 706 362 (MOSER)<br>+ Totality +<br>-- | 1 | |
| | US - A - 3 649 532 (MC LEAN)<br>+ Column 2, lines 38,39; claims 1,4 +<br>-- | 1,12, 13 | |
| A | VOM WASSER, vol. 47, 1976, Verlag Chemie<br>G. GOHNSACK "Chemische Grundlagen der Enteisenung"<br>+ Pages 281-296; especially pages 290-293 +<br>---- | | CATEGORY OF CITED DOCUMENTS<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| X | The present search report has been drawn up for all claims | | &: member of the same patent family, corresponding document |

| Place of search | Date of completion of the search | Examiner |
|---|---|---|
| VIENNA | 19-02-1981 | GRÜNDIG |